# EUROPÄISCHE PATENTSCHRIFT

(11) **EP 3 215 899 B1**
(45) Veröffentlichungstag und Bekanntmachung des Hinweises auf die Patenterteilung: **10.07.2019**
(21) Anmeldenummer: 15778615.3
(22) Anmeldetag: 09.10.2015
(51) Int. Cl.: G05B 19/042

(54) **VERFAHREN ZUM HERSTELLEN UND BETREIBEN EINER INDUSTRIELLEN MASCHINE ODER ANLAGE**
METHOD FOR PRODUCING AND OPERATING AN INDUSTRIAL MACHINE OR PLANT
PROCÉDÉ DE PRODUCTION ET DE FONCTIONNEMENT D'UNE MACHINE OU INSTALLATION INDUSTRIELLE

(30) Priorität: 05.11.2014 DE 102014016349
(43) Veröffentlichungstag der Anmeldung: 13.09.2017
(73) Patentinhaber: SEW-EURODRIVE GmbH & Co. KG, 76646 Bruchsal (DE)
(72) Erfinder: FRITZ, Ronny, 76646 Bruchsal (DE); BRECHT, Roland, 76307 Karlsbad (DE)
(86) Internationale Anmeldenummer: PCT/EP2015/001992
(87) Internationale Veröffentlichungsnummer: WO 2016/070953

(56) Entgegenhaltungen:
- WO-A1-01/47099
- WO-A1-2006/136253
- DE-A1- 19 961 920

## Beschreibung

Die Erfindung betrifft ein Verfahren zum Herstellen und Betreiben einer industriellen Maschine oder Anlage.

Es ist allgemein bekannt, dass bei Erstellung, also Aufbau, einer Maschine oder Anlage nach Einbau eines Steuerungssystems eine Inbetriebnahme erfolgt, bei welcher Parameter eingegeben werden.

**Aus der** WO 01/47099 A1 **ist als nächstliegender Stand der Technik ein Verfahren zum Programmieren einer Motorsteuerung bekannt.**

**Aus der** WO 2006/136253 A1 **ist ein Verfahren zur Inbetriebnahme einer Anlage bekannt.**

**Aus der** DE 199 61 920 A1 **ist ein Verfahren zur Fern-Inbetriebnahme bekannt.**

Der Erfindung liegt daher die Aufgabe zugrunde, eine schnellere Inbetriebnahme zu erreichen.

Erfindungsgemäß wird die Aufgabe bei dem Verfahren nach den in Anspruch 1 angegebenen Merkmalen gelöst.

Wichtige Merkmale der Erfindung bei dem Verfahren sind, dass das Verfahren zum Herstellen und Betreiben einer industriellen Maschine oder Anlage vorgesehen ist,

Verfahren zum Herstellen und Betreiben einer industriellen Maschine oder Anlage,
wobei die Maschine oder Anlage einen industriellen Prozess ausführt, der durch Prozessparameter gekennzeichnet ist
wobei die Maschine oder Anlage ein Steuerungssystem umfasst, welches eine Steuerung und zumindest einen mit der Steuerung zum Datenaustausch verbundenen Umrichter aufweist,
wobei der oder die Umrichter mit Parametern parametrierbar sind, wobei
- in einem Rechner ein Applikationsprogramm ausgewählt wird, das dem industriellen Prozess zugeordnet ist und diesen steuerbar macht,
- die Prozessparameter in den Rechner eingegeben werden,
- aus einer Menge von vom Rechner angezeigten, symbolisierten Umrichtern zumindest ein symbolisierter Umrichter ausgewählt wird, insbesondere so dass einem jeweiligen Umrichter eineindeutig ein jeweiliger symbolisierter Umrichter zugeordnet wird,
- im Rechner für das ausgewählte Applikationsprogramm anhand der eingegebenen Prozessdaten Parameterwerte des jeweiligen Umrichters bestimmt werden,
- die Steuerung mit dem Applikationsprogramm und den Prozessparametern ausgestattet wird, insbesondere indem vom Rechner aus in einem Speicher der Steuerung das Applikationsprogramm und die Prozessparameter abgespeichert werden, sowie der jeweilige Umrichter mit den bestimmten Parametern ausgestattet wird, insbesondere vom Rechner aus in einem Speicher des jeweiligen Umrichters die bestimmten Parameter abgespeichert werden oder vom Rechner aus die bestimmten Parameter in einem Speicher der Steuerung abgespeichert werden und von dort aus in einem jeweiligen Speicher des jeweiligen Umrichters die bestimmten Parameter abgespeichert werden, insbesondere automatisch,
die Steuerung und der jeweilige Umrichter in die Maschine oder Anlage eingebaut werden, insbesondere so dass Maschine oder Anlage betriebsbereit sind.

Wichtige Merkmale der Erfindung bei dem Verfahren sind, dass das Verfahren zum Herstellen und Betreiben einer industriellen Maschine oder Anlage vorgesehen ist,
wobei die Maschine oder Anlage einen industriellen Prozess ausführt, der durch Prozessparameter gekennzeichnet ist
wobei die Maschine oder Anlage ein Steuerungssystem umfasst, welches eine Steuerung und zumindest einen mit der Steuerung zum Datenaustausch verbundenen Umrichter aufweist,
wobei der oder die Umrichter mit Parametern parametrierbar sind, wobei
- in einem Rechner ein Applikationsprogramm ausgewählt wird, das dem industriellen Prozess zugeordnet ist und diesen steuerbar macht,
- die Prozessparameter in den Rechner eingegeben werden,
- aus einer Menge von vom Rechner angezeigten, symbolisierten Umrichtern zumindest ein symbolisierter Umrichter ausgewählt wird, insbesondere so dass einem jeweiligen Umrichter eineindeutig ein jeweiliger symbolisierter Umrichter zugeordnet wird,
- im Rechner für das ausgewählte Applikationsprogramm anhand der eingegebenen Prozessdaten Parameterwerte des jeweiligen Umrichters bestimmt werden,
- die Steuerung mit dem Applikationsprogramm und den Prozessparametern ausgestattet wird, insbesondere indem vom Rechner aus in einem Speicher der Steuerung das Applikationsprogramm und die Prozessparameter abgespeichert werden, und vom Rechner aus die bestimmten Parameter in einem Speicher der Steuerung abgespeichert werden
- die Steuerung und der jeweilige Umrichter in die Maschine oder Anlage eingebaut werden,
- der jeweilige Umrichter mit den bestimmten Parametern ausgestattet wird, indem von dem Speicher der Steuerung aus in einem jeweiligen Speicher des jeweiligen Umrichters die bestimmten Parameter abgespeichert werden, insbesondere automatisch.

Von Vorteil ist dabei, dass eine schnelle Inbetriebnahme der Maschine oder Anlage ausführbar ist. Denn schon bei der Herstellung sind die Prozessparameter und die Parameter dem Rechner bekannt gemacht beziehungsweise werden bestimmt. Daher ist das Speichern dieser Parameter in der Steuerung oder den Umrichtern schon bei der Herstellung vorteilhaft. Denn auf diese Weise ist die Inbetriebnahme der Anlage oder Maschine nach deren Erstellung unverzüglich, also ohne Inbetriebnahme, ermöglicht. Denn die Steuerung hat schon bei Auslieferung und Einbau in die Anlage oder Maschine die Parameter in sich dabei und benötigt daher keine Inbetriebnahme. Auch ein Austausch des Steuerungssystems bei Wartung einer Maschine oder Anlage ist schnell und einfach ermöglicht, da die Austauschgeräte selbst wiederum dieselben Parameter aufweisen.

Bei einer vorteilhaften Ausgestaltung ist durch das Applikationsprogramm mit den eingegebenen Prozessparametern die Maschine oder Anlage steuerbar. Von Vorteil ist dabei, dass die Parameter schon offline bestimmbar sind. Somit entfällt die Inbetriebnahme.

Bei einer vorteilhaften Ausgestaltung ist durch die bestimmten Parameterwerte der jeweilige Umrichter betreibbar gemacht. Von Vorteil ist dabei, dass die Parameter ebenfalls schon offline im Rechner bestimmt werden und der bestimmte Satz von Parameterwerten ein Betreiben des Umrichters ermöglicht. Es müssen also keine weiteren Parameterwerte bestimmt oder eingegeben werden.

Bei einer vorteilhaften Ausgestaltung sind statt des einen jeweiligen Umrichters mehrere Umrichter vom Steuerungssystem umfasst, die jeweils mit der Steuerung zum Datenaustausch verbunden sind und deren Parameter vom Rechner bestimmt sind und die mit den bestimmten Parametern zum Betrieb der Maschine oder Anlage geeignet sind. Von Vorteil ist dabei, dass die Parameter für das gesamte Steuerungssystem offline, also schon vor Herstellung der Steuerung und der Umrichter, vorab bestimmbar sind und dann bei Herstellung der Steuerung und der Umrichter die eingegebenen oder bestimmten Parameter in der Steuerung beziehungsweise in den Umrichtern abspeicherbar sind. Nach Herstellung und Auslieferung der Steuerung und der Umrichter werden diese in die Maschine oder Anlage eingebaut und sind nach Einbau sofort betriebsbereit und betriebsfähig, da eine aufwendige Inbetriebnahme, bei welcher Parameterwerte in den Umrichter eingegeben werden müssen und/oder Prozessparameter in die Steuerung dem Applikationsprogramm zugänglich eingegeben werden müssen, entfällt.

Bei einer vorteilhaften Ausgestaltung ist der jeweilige Speicher langzeitstabil, insbesondere als EEPROM-Speicher oder Festplattenspeicher oder als SD-Card, CFast-Card oder anderes PC-lesbaren Speichermedium ausgeführt. Von Vorteil ist dabei, dass die gespeicherten Daten auch bei Auslieferung der Geräte ohne Stromversorgung gespeichert bleiben.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand eines konkreten erfindungsgemäßen Ausführungsbeispiels näher erläutert:
In einer industriellen Anlage ist ein Steuerungssystem für die Anlage oder für eine Maschine der Anlage angeordnet. Dieses Steuerungssystem besteht aus einer Steuerung, die mit umrichtergespeisten Antrieben verbunden ist.

Jeder umrichtergespeiste Antrieb weist einen von einem jeweiligen Umrichter gespeisten Elektromotor auf.

Jeder Umrichter benötigt für seine Funktion die Parameterwerte, wie beispielsweise Steigung der Drehzahlrampe bei einem drehzahlgeregelten Betrieb oder die Art des Regelverfahrens.

Ebenso benötigt die Steuerung für den Betrieb Software. Als Software wird hier eine Applikationssoftware verwendet, die den Betriebsablauf der Anlage beziehungsweise Maschine steuert. Mit Applikation wird hierbei die Art der Anlage beziehungsweise Maschine bezeichnet. Eine Applikation ist also beispielsweise eine Schlauchbeutelmaschine, eine Förderanlage, eine Werkzeugmaschine, eine Handling-Vorrichtung oder ein intralogistisches System.

Nach Stand der Technik wird die Applikationssoftware auf einem Rechner programmiert und dort das so entstandene Programm abgespeichert. Bei Inbetriebnahme nach Stand der Technik der Anlage wird das Programm in kompilierter Form an die Steuerung übermittelt und es werden die Umrichter mit der Steuerung zum Datenaustausch verbunden. Außerdem werden die Parameterwerte in den Umrichtern hinterlegt und Prozessparameter, also sich auf den Betriebsablauf der Anlage beziehungsweise Maschine beziehende Parameter, in die Steuerung eingegeben.

Erfindungsgemäß wird in einem Rechner die Applikationssoftware ausgewählt aus einer Bibliothek von verschiedenen Applikationssoftwares. Außerdem werden die Prozessparameter in den Rechner eingeführt. Außerdem werden die Typen der Umrichter ausgewählt aus einer Bibliothek von möglichen Umrichtern. Im Rechner werden automatisch Parameterwerte für die Umrichter bestimmt. Dies ist daher möglich, weil dem Rechner die Prozessparameter bekannt gemacht sind und die Typen der Umrichter. Wenn beispielsweise ein Prozesstakt als Prozessparameter eingegeben ist, werden daraus Drehzahlparameter für den Umrichter bestimmbar. Je nach Art der Maschine oder Anlage sind hierzu noch weitere Prozessparameter notwendig, wie beispielsweise die während des Prozesstaktes von dem zum Umrichter zugeordneten umrichtergespeisten Antrieb zu bewirkende Streckenlänge oder Winkelstreckenlänge. Außerdem ist aus einem als Prozessparameter eingegebenen Wert für maximalen Ruck beim Fördern eines Objekts ein zeitabhängiger Beschleunigungsverlauf automatisch bestimmbar, der in kürzester oder in einer durch den Prozesstakt vorgegebenen Zeitdauer von der jeweiligen Startposition zur jeweiligen Zielposition gelangt.

Wenn also beispielsweise die Applikationssoftware für eine Schlauchbeutelmaschine ausgewählt wird, wird der das Regelungsverfahren beschreibende Prozessparameter "interpolierte Lageregelung" bestimmt und ebenso der das Regelungsverfahren beschreibende Parameter des Umrichters entsprechend gesetzt. Die genannte beispielhafte Applikationssoftware benötigt außerdem drei Umrichter, so dass auch die Parametersätze für die drei Umrichter bestimmt und gespeichert werden.

Erfindungsgemäß wird bei der Herstellung der Steuerung diese mit der Applikationssoftware beladen und diese derart installiert, dass bei einem später nachfolgendem, insbesondere erneutem Zuschalten der Versorgungsspannung an die Steuerung die Applikationssoftware selbsttätig gestartet wird, wobei die Prozessparameter wirksam sind.

Die Prozessdaten sind ebenfalls im Rechner gespeichert wie auch die Parameterwerte für die Umrichter.

Nach Auslieferung und Einbau der Steuerung und der Umrichter in die Maschine beziehungsweise in die Anlage, wobei auch die Umrichter mit der Steuerung zum Datenaustausch verbunden werden, werden nach Zuschalten der Versorgungsspannung und Starten der Applikationssoftware die Parameterwerte von der Steuerung an die Umrichter übertragen. Somit ist dann die Maschine oder Anlage betreibbar.

Sobald also die Maschine beziehungsweise Anlage eingeschaltet wird, also die Versorgungsspannung zur Verfügung gestellt wird, wird das Applikationsprogramm gestartet und die Umrichter mit den vorgegebenen Parameterwerten betrieben. Der industrielle Prozess, insbesondere Fertigungsprozess, Bearbeitungsprozess oder dergleichen, startet dann.

Vorzugsweise wird bei Auswahl der "Werkseinstellung" an der Steuerung die Applikationssoftware nicht gelöscht sondern, weil sie bei Herstellung im Speicher der Steuerung abgespeichert wurde, dort belassen. Gleiches gilt für die zugehörigen vom Rechner bestimmten Parameter. Ebenso meldet sich die Steuerung nach Auswahl der "Werkseinstellung" mit einer Bezeichnung, die eineindeutig der Applikationssoftware zugeordnet ist, beispielsweise "Applikationsgerät Schlauchbeutelmaschine".

Bei einem weiteren erfindungsgemäßen Ausführungsbeispiel werden die Parameterwerte schon bei der Herstellung der Umrichter von dem Rechner in die Umrichter übertragen, so dass die Umrichter sofort nach Einbau in die Maschine oder Anlage betriebsfähig sind.

## Patentansprüche

1. Verfahren zum Herstellen und Betreiben einer industriellen Maschine oder Anlage,
wobei die Maschine oder Anlage einen industriellen Prozess ausführt, der durch Prozessparameter gekennzeichnet ist
wobei die Maschine oder Anlage ein Steuerungssystem umfasst, welches eine Steuerung und zumindest einen mit der Steuerung zum Datenaustausch verbundenen Umrichter aufweist,
wobei der oder die Umrichter mit Parametern parametrierbar sind, wobei
- in einem Rechner ein Applikationsprogramm ausgewählt wird, das dem industriellen Prozess zugeordnet ist und diesen steuerbar macht,
- die Prozessparameter in den Rechner eingegeben werden,
- aus einer Menge von vom Rechner angezeigten, symbolisierten Umrichtern zumindest ein symbolisierter Umrichter ausgewählt wird, so dass einem jeweiligen Umrichter eineindeutig ein jeweiliger symbolisierter Umrichter zugeordnet wird,
- im Rechner für das ausgewählte Applikationsprogramm anhand der eingegebenen Prozessparameter Parameterwerte des jeweiligen Umrichters bestimmt werden,
- **bei Herstellung der Steuerung und des zumindest einen mit der Steuerung zum Datenaustausch verbundenen Umrichters die Prozessparameter und die Parameterwerte bestimmt werden und in der Steuerung beziehungsweise in den Umrichter abgespeichert werden, wobei** die Steuerung mit dem Applikationsprogramm und den Prozessparametern ausgestattet wird, indem vom Rechner aus in einem Speicher der Steuerung das Applikationsprogramm und die Prozessparameter abgespeichert werden, sowie der jeweilige Umrichter mit den bestimmten Parameter**werte**n ausgestattet wird, **wobei** vom Rechner aus in einem Speicher des jeweiligen Umrichters die bestimmten Parameterwerte abgespeichert werden oder vom Rechner aus die bestimmten Parameterwerte in einem Speicher der Steuerung abgespeichert werden und von dort aus in einem jeweiligen Speicher des jeweiligen Umrichters die bestimmten Parameterwerte **automatisch** abgespeichert werden,
- **danach** die Steuerung und der jeweilige Umrichter in die Maschine oder Anlage eingebaut werden, insbesondere so dass Maschine oder Anlage betriebsbereit sind.

2. Verfahren zum Herstellen und Betreiben einer industriellen Maschine oder Anlage,
wobei die Maschine oder Anlage einen industriellen Prozess ausführt, der durch Prozessparameter gekennzeichnet ist
wobei die Maschine oder Anlage ein Steuerungssystem umfasst, welches eine Steuerung und zumindest einen mit der Steuerung zum Datenaustausch verbundenen Umrichter aufweist,
wobei der oder die Umrichter mit Parametern parametrierbar sind, wobei
- in einem Rechner ein Applikationsprogramm ausgewählt wird, das dem industriellen Prozess zugeordnet ist und diesen steuerbar macht,
- die Prozessparameter in den Rechner eingegeben werden,
- aus einer Menge von vom Rechner angezeigten, symbolisierten Umrichtern zumindest ein symbolisierter Umrichter ausgewählt wird, so dass einem jeweiligen Umrichter eineindeutig ein jeweiliger symbolisierter Umrichter zugeordnet wird,
- im Rechner für das ausgewählte Applikationsprogramm anhand der eingegebenen Prozessparameter Parameterwerte des jeweiligen Umrichters bestimmt werden,
- **bei Herstellung der Steuerung und des zumindest einen mit der Steuerung zum Datenaustausch verbundenen Umrichters die Prozessparameter und die Parameterwerte bestimmt werden und in der Steuerung beziehungsweise in den Umrichter abgespeichert werden, wobei** die Steuerung mit dem Applikationsprogramm und den Prozessparametern ausgestattet wird, indem vom Rechner aus in einem Speicher der Steuerung das Applikationsprogramm und die Prozessparameter abgespeichert werden, und vom Rechner aus die bestimmten Parameter**werte** in einem Speicher der Steuerung abgespeichert werden
- **danach** die Steuerung und der jeweilige Umrichter in die Maschine oder Anlage eingebaut werden,
- **danach** der jeweilige Umrichter mit den bestimmten Parameter**werte**n ausgestattet wird, indem von dem Speicher der Steuerung aus in einem jeweiligen Speicher des jeweiligen Umrichters die bestimmten Parameter**werte automatisch** abgespeichert werden.

3. Verfahren nach Anspruch 1 oder 2,
**dadurch gekennzeichnet, dass**
durch das Applikationsprogramm mit den eingegebenen Prozessparametern die Maschine oder Anlage steuerbar ist.

4. Verfahren nach mindestens einem der vorangegangenen Ansprüche,
**dadurch gekennzeichnet, dass**
durch die bestimmten Parameterwerte der jeweilige Umrichter betreibbar gemacht ist.

5. Verfahren nach mindestens einem der vorangegangenen Ansprüche,
**dadurch gekennzeichnet, dass**
**statt des einen jeweiligen Umrichters mehrere Umrichter vom Steuerungssystem umfasst sind, die jeweils mit der Steuerung zum Datenaustausch verbunden sind und deren Parameterwerte vom Rechner bestimmt sind und die mit den bestimmten Parameterwerten zum Betrieb der Maschine oder Anlage geeignet sind.**

6. Verfahren nach mindestens einem der vorangegangenen Ansprüche,
**dadurch gekennzeichnet, dass**
der jeweilige Speicher langzeitstabil ist, insbesondere als EEPROM-Speicher oder Festplattenspeicher oder als SD-Card, CFast-Card oder anderes PC-lesbaren Speichermedium ausgeführt ist.

## Claims

1. A method for producing and operating an industrial machine or installation,
wherein the machine or installation performs an industrial process which is **characterised by** process parameters,
wherein the machine or installation comprises a control system which has a control means and at least one converter which is connected for data exchange to the control means,
wherein the converter or converters is/are parameterisable with parameters, wherein
- in a computer an application program which is associated with the industrial process and makes it controllable is selected,
- the process parameters are input into the computer,
- at least one symbolised converter is selected from a quantity of symbolised converters displayed by the computer, so that a respective symbolised converter is associated with a respective converter on a one-to-one basis,
- parameter values of the respective converter are determined in the computer for the selected application program using the input process parameters,
- when producing the control means and the at least one converter which is connected for data exchange to the control means, the process parameters and the parameter values are determined and are stored in the control means or in the converter, wherein the control means is equipped with the application program and the process parameters, in that the application program and the process parameters are stored from the computer in a memory of the control means, and also the respective converter is equipped with the determined parameter values, wherein the determined parameter values are stored from the computer in a memory of the respective converter, or from the computer the determined parameter values are stored in a memory of the control means and from there the determined parameter values are automatically stored in a respective memory of the respective converter,
- thereafter the control means and the respective converter are installed in the machine or installation, in particular so that the machine or installation are ready for operation.

2. A method for producing and operating an industrial machine or installation,
wherein the machine or installation performs an industrial process which is **characterised by** process parameters,
wherein the machine or installation comprises a control system which has a control means and at least one converter which is connected for data exchange to the control means,
wherein the converter or converters is/are parameterisable with parameters, wherein
- in a computer an application program which is associated with the industrial process and makes it controllable is selected,
- the process parameters are input into the computer,
- at least one symbolised converter is selected from a quantity of symbolised converters displayed by the computer, so that a respective symbolised converter is associated with a respective converter on a one-to-one basis,
- parameter values of the respective converter are determined in the computer for the selected application program using the input process parameters,
- when producing the control means and the at least one converter which is connected for data exchange to the control means the process parameters and the parameter values are determined and stored in the control means or in the converter, wherein the control means is equipped with the application program and the process parameters, in that the application program and the process parameters are stored from the computer in a memory of the control means, and the determined parameter values are stored from the computer in a memory of the control means,
- thereafter the control means and the respective converter are installed in the machine or installation,
- thereafter the respective converter is equipped with the determined parameter values, in that from the memory of the control means the determined parameter values are automatically stored in a respective memory of the respective converter.

3. A method according to Claim 1 or 2,
**characterised in that**
the machine or installation can be controlled by the application program with the input process parameters.

4. A method according to at least one of the preceding claims,
**characterised in that**
the respective converter is made operable by the determined parameter values.

5. A method according to at least one of the preceding claims,
**characterised in that**
instead of the one respective converter a plurality of converters are comprised by the control system which in each case are connected for data exchange to the control means and the parameter values of which are determined by the computer and which with the determined parameter values are suitable for operating the machine or installation.

6. A method according to at least one of the preceding claims,
**characterised in that**
the respective memory is long-term stable, in particular is embodied as an EEPROM memory or hard-disk storage or as an SD card, CFast card or other PC-readable storage medium.

## Revendications

1. Procédé de fabrication et d'exploitation d'une machine ou installation industrielle,
laquelle machine ou installation exécute un processus industriel **caractérisé par** des paramètres de processus,
ladite machine ou installation incluant un système de commande muni d'une commande et d'au moins un onduleur raccordé à ladite commande, en vue de l'échange de données, le ou les onduleur(s) pouvant être paramétré(s) à l'aide de paramètres, sachant
- qu'il s'opère, dans un ordinateur, une sélection d'un programme d'application qui est associé audit processus industriel, et rend ce dernier apte à la commande,
- que les paramètres de processus sont entrés dans l'ordinateur,
- qu'au moins un onduleur symbolisé est sélectionné à partir d'une quantité d'onduleurs symbolisés, affichés par ledit ordinateur, de telle sorte qu'un onduleur symbolisé respectif soit associé, de manière univoque, à un onduleur considéré,
- que des valeurs de paramètres dudit onduleur considéré sont déterminées pour le programme d'application sélectionné, dans l'ordinateur, sur la base des paramètres de processus entrés,
- que, lors de la fabrication de la commande et de l'onduleur à présence minimale, raccordé à ladite commande en vue de l'échange de données, les paramètres de processus et les valeurs desdits paramètres sont déterminés, et respectivement mémorisés dans la commande ou dans les onduleurs, sachant que ladite commande est pourvue du programme d'application et des paramètres de processus du fait que ledit programme d'application et lesdits paramètres de processus sont mémorisés, à partir de l'ordinateur, dans une mémoire de ladite commande et sachant, de même, que l'onduleur considéré est pourvu des valeurs de paramètres déterminées, auquel cas lesdites valeurs de paramètres déterminées sont mémorisées dans une mémoire dudit onduleur considéré, à partir de l'ordinateur, ou bien lesdites valeurs de paramètres déterminées sont mémorisées, à partir dudit ordinateur, dans une mémoire de ladite commande et, de là, lesdites valeurs de paramètres déterminées sont mémorisées automatiquement dans une mémoire respective dudit onduleur considéré,
- après quoi ladite commande et ledit onduleur considéré sont intégrés dans la machine ou dans l'installation, notamment de façon telle que ladite machine ou installation soit prête à fonctionner.

2. Procédé de fabrication et d'exploitation d'une machine ou installation industrielle,
laquelle machine ou installation exécute un processus industriel **caractérisé par** des paramètres de processus,
ladite machine ou installation incluant un système de commande muni d'une commande et d'au moins un onduleur raccordé à ladite commande, en vue de l'échange de données, le ou les onduleur(s) pouvant être paramétré(s) à l'aide de paramètres, sachant
- qu'il s'opère, dans un ordinateur, une sélection d'un programme d'application qui est associé audit processus industriel, et rend ce dernier apte à la commande,
- que les paramètres de processus sont entrés dans l'ordinateur,
- qu'au moins un onduleur symbolisé est sélectionné à partir d'une quantité d'onduleurs symbolisés, affichés par ledit ordinateur, de telle sorte qu'un onduleur symbolisé respectif soit associé, de manière univoque, à un onduleur considéré,
- que des valeurs de paramètres dudit onduleur considéré sont déterminées pour le programme d'application sélectionné, dans l'ordinateur, sur la base des paramètres de processus entrés,
- que, lors de la fabrication de la commande et de l'onduleur à présence minimale, raccordé à ladite commande en vue de l'échange de données, les paramètres de processus et les valeurs desdits paramètres sont déterminés, et respectivement mémorisés dans la commande ou dans les onduleurs, sachant que ladite commande est pourvue du programme d'application et des paramètres de processus du fait que ledit programme d'application et lesdits paramètres de processus sont mémorisés, à partir de l'ordinateur, dans une mémoire de ladite commande, et que lesdites valeurs de paramètres déterminées sont mémorisées dans une mémoire de ladite commande, à partir dudit ordinateur,
- après quoi ladite commande et ledit onduleur considéré sont intégrés dans la machine ou dans l'installation,
- ensuite de quoi l'onduleur considéré est pourvu desdites valeurs de paramètres déterminées, du fait que lesdites valeurs de paramètres déterminées sont mémorisées automatiquement, à partir de la mémoire de ladite commande, dans une mémoire respective dudit onduleur considéré.

3. Procédé selon la revendication 1 ou 2,
**caractérisé par le fait que**
la machine ou l'installation peut être commandée par le programme d'application, à l'aide des paramètres de processus entrés.

4. Procédé selon au moins l'une des revendications précédentes,
**caractérisé par le fait que**
l'onduleur considéré est rendu apte au fonctionnement par les valeurs de paramètres déterminées.

5. Procédé selon au moins l'une des revendications précédentes,
**caractérisé par le fait que**
le système de commande inclut, à la place de l'onduleur considéré à présence unique, plusieurs onduleurs qui sont respectivement raccordés à la commande, en vue de l'échange de données, dont les valeurs de paramètres sont déterminées par l'ordinateur et qui se prêtent, à l'aide desdites valeurs de paramètres déterminées, à l'exploitation de la machine ou de l'installation.

6. Procédé selon au moins l'une des revendications précédentes,
**caractérisé par le fait que**
la mémoire considérée est réalisée avec stabilité de longue durée, en particulier sous la forme d'une mémoire EEPROM ou d'un espace disque dur, voire d'une carte SD, d'une carte CFast, ou d'un autre support de stockage lisible sur ordinateur.
